# EUROPÄISCHE PATENTANMELDUNG

(11) **EP 3 835 035 A1**
(43) Veröffentlichungstag der Anmeldung: **16.06.2021**
(21) Anmeldenummer: 19215157.9
(22) Anmeldetag: 11.12.2019
(51) Int. Cl.: B29C 65/08, B65D 75/58, B29K 23/00, B29L 9/00, B29K 705/02, B29K 711/12

(54) **VERFAHREN ZUM VERBINDEN VON WERKSTÜCKEN UND ZUSAMMENGESETZTER GEGENSTAND**

(71) Anmelder: Telsonic Holding AG, 9552 Bronschhofen (CH)
(72) Erfinder: Müller, Ralf, 9063 Stein (CH)
(74) Vertreter: Hepp Wenger Ryffel AG

(57) **Zusammenfassung**

Zwei Werkstücke 30, 40 werden mittels Ultraschall verbunden. Dazu wird zuerst ein Werkstück 30 mit wenigstens einem Energierichtungsgeber 31 und ein zweites Werkstück 40 bereitgestellt. Die Werkstücke werden miteinander in Kontakt gebracht derart, dass den Energierichtungsgeber 31 in Kontakt mit einer ersten Oberfläche 41 des zweiten Werkstücks 40 gelangt. Danach werden Ultraschallschwingungen in eines der Werkstücke 40 über eine Arbeitsfläche 11 einer Sonotrode 10 eingeleitet. Es wird eine Sonotrode 10 verwendet, welche auf der Arbeitsfläche 11 eine Kontur mit Kontaktlinien 12 aufweist. Die Sonotrode 10 wird bezüglich des ersten Werkstücks 30 so positioniert, dass die Kontaktlinien 12 quer zum Energierichtungsgeber 31 verlaufen.

## Beschreibung

Die Erfindung betrifft ein Verfahren zum Verbinden von Werkstücken und einen zusammengesetzten Gegenstand mit den Merkmalen des Oberbegriffs der unabhängigen Patentansprüche.

In vielen Anwendungsgebieten müssen Werkstücke miteinander verbunden werden. Denkbar ist beispielsweise das Verbinden von Kunststoffteilen, beispielsweise im Bereich von Verpackungen, im Automobilbau oder bei der Herstellung von medizinischen Geräten. Ebenso müssen teilweise metallische Werkstücke miteinander verbunden werden, beispielsweise Kontaktteile mit elektrischen Leitern.

Es ist bekannt, zum Verbinden von solchen Werkstücken Ultraschallschwingungen in die Werkstücke einzuleiten. Durch die eingeleiteten Ultraschallschwingungen entstehen Ultraschallschweissungen, welche die Werkstücke miteinander verbinden.

Insbesondere bei unterschiedlichen Materialpaarungen ist es allerdings nicht ohne weiteres möglich, zufriedenstellende Ultraschallschweissungen zu erzeugen. Insbesondere bei Werkstücken aus Kunststoffmaterialien, welche unterschiedliche Schmelzpunkte aufweisen, kann sich die Schweissung schwierig gestalten. Eine Möglichkeit, auch bei unterschiedlichen Paarungen von Materialien Schweissresultate mit zufriedenstellenden Eigenschaften zu erzielen besteht darin, die Anpresskraft, die Schweissdauer und/oder die eingebrachte Energie zu erhöhen. Dies kann allerdings bei sensiblen Werkstücken zu Zerstörungen führen.

Ein typisches Anwendungsgebiet beim Verschweissen von Werkstücken aus Kunststoff ist das Befestigen von Ausgussteilen an Verpackungen, beispielsweise Getränkeverpackungen. Der Ausguss soll dabei aus einem Material bestehen, das möglichst sauerstoffdicht ist, beispielsweise HDPE. Die Verpackung an sich besteht aus einem Körper, der aus einer Folie gebildet ist, typischerweise einer Laminatfolie. Die Laminatfolie weist auf ihrer Aussenseite eine Kunststoffschicht, typischerweise aus LDPE auf. Eine Kartonschicht stellt die gewünschte Festigkeit bereit. Eine Aluminiumschicht sorgt für Sauerstoff-Dichtheit. Es hat sich nun aber gezeigt, dass beim Aufbringen von grossen Kräften bei der Verschweissung die Aluminiumschicht zerstört werden kann. Dies kann zu Qualitätsproblemen beim verpackten Inhalt führen, typischerweise einem Getränk. Das Aufreissen der Aluminiumschicht kann zur Bildung von Taschen und damit auch zu hygienischen Problemen führen.

Es ist daher die Aufgabe der Erfindung, die Nachteile des Bekannten zu vermeiden, insbesondere also ein Verfahren zum Verbinden von Werkstücken zu schaffen, mit welchem auch Werkstücke aus unterschiedlichem Material mit einer guten Schweissqualität miteinander verbunden werden können. Eine weitere Aufgabe der Erfindung besteht darin, einen zusammengesetzten Gegenstand zu schaffen, bei dem zwei Werkstücke insbesondere auch aus unterschiedlichen Materialien mit einer guten Schweissqualität miteinander verbunden sind.

Diese Aufgaben werden erfindungsgemäss mit einem Verfahren und einem Gegenstand mit den Merkmalen des kennzeichnenden Teils der unabhängigen Patentansprüche gelöst. Bevorzugte Ausführungsformen ergeben sich aus den abhängigen Ansprüchen.

Das erfindungsgemässe Verfahren dient zum Verbinden von Werkstücken mittels Ultraschall. Typischerweise werden zwei Werkstücke miteinander verbunden. Es ist aber auch denkbar, mehr als zwei Werkstücke miteinander zu verbinden.

In einem ersten Schritt wird ein erstes Werkzeug bereitgestellt, das wenigstens einen Energierichtungsgeber aufweist. Es ist an sich bekannt, beim Ultraschallschweissen Werkstücke mit Energierichtungsgebern zu versehen. Ultraschallschwingungen werden im Bereich des Energierichtungsgebers in das Werkstück eingeleitet.

Das erste Werkstück ist typischerweise ein Ausguss für eine Verpackung. Es sind aber auch andere Werkstücke denkbar, beispielsweise Dicht- oder Filtermembranen auf Spritzgussteilen, z.B. in der Medizintechnik. Denkbar wären aber auch Sensorhalter zur Aufnahme von Sensoren in Automobilstossstangen.

Ausserdem wird ein zweites Werkstück bereitgestellt. Dabei kann es sich insbesondere um einen Packstoff zum Herstellen einer Verpackung dienen. Es ist aber auch denkbar, dass das zweite Werkstück eine Stossstange ist, auf der ein wie vorstehend beschriebener Sensorhalter aufgebracht werden soll.

Das erste und das zweite Werkstück werden derart miteinander in Kontakt gebracht, dass der Energierichtungsgeber in Kontakt mit einer ersten Oberfläche des zweiten Werkstücks gelangt.

Danach werden über eine Arbeitsfläche einer Sonotrode eingeleitet Ultraschallschwingungen in eines der Werkstücke. Sonotroden sind mit Ultraschallschwingungen beaufschlagte Werkzeuge und dem Fachmann in vielen Ausgestaltungen bekannt.

Erfindungsgemäss wird eine Sonotrode verwendet, welche auf ihrer Arbeitsfläche eine Kontur mit Kontaktlinien aufweist. Die Sonotrode wird dabei bezüglich des ersten Werkstücks so positioniert, dass die Kontaktlinien quer zum Energierichtungsgeber verlaufen. Quer bedeutet typischerweise unter einem Winkel von +/- 45°, bevorzugt etwa 85°-95°, besonders bevorzugt etwa 90°. Auf diese Weise wird Schall nur in Kreuzungspunkten zwischen den Kontaktlinien und dem Energierichtungsgeber in die Werkstücke, insbesondere in das zweite Werkstück eingeleitet. Dadurch ist die Belastung insbesondere des zweiten Werkstücks geringer. Zerstörungen durch die aufgebrachte Kraft werden vermieden, weil aufgrund der Beschränkung der Krafteinleitung auf die Kreuzungspunkte die insgesamt wirkende Kraft geringer ist.

Bevorzugt wird die Arbeitsfläche der Sonotrode in Kontakt mit einer zweiten Oberfläche des zweiten Werkstücks gebracht, welche der ersten Oberfläche gegenüberliegt, das heisst der Oberfläche, welche mit dem Energierichtungsgeber in Kontakt gelangt.

Typischerweise wird also das zweite Werkstück, beispielsweise eine Folie eines Packstoffs, in Kontakt mit der Arbeitsfläche der Sonotrode gebracht.

Gemäss einem bevorzugten Ausführungsbeispiel wird eine Sonotrode verwendet, bei der die Arbeitsfläche kreisförmig ist. In Abhängigkeit der Form des Werkstücks sind aber auch andere Formen der Arbeitsfläche der Sonotrode denkbar. Dabei sind die Kontaktlinien sternförmig auf der Arbeitsfläche bezogen auf ein Zentrum angeordnet. Die Arbeitsfläche muss keinen vollständigen Kreis umfassen, sondern kann auch kreisringförmig sein.

Bevorzugt wird eine Sonotrode verwendet, bei der die Kontaktlinien auf einer Rippe zwischen zwei benachbarten Vertiefungen ausgebildet sind. Typischerweise kann die Arbeitsfläche der Sonotrode mit einer Hirth Verzahnung versehen sein, welche die Kontaktlinien auf den Rippen bildet.

Bevorzugt ist der Querschnitt der Rippe in einer Ebene senkrecht zur radialen Richtung in einem Schweissbereich in radialer Richtung gesehen konstant. Damit wird sichergestellt, dass die auf das entsprechende Werkstück wirkende Arbeitsfläche mit den Kontaktrillen gleich bleibt, auch wenn das Werkstück bezogen auf die Arbeitsfläche der Sonotrode nicht genau präzise positioniert ist. Insbesondere bei kreisförmigen Werkstücken und kreisförmigen Arbeitsflächen der Sonotrode ist es denkbar, dass keine perfekte Ausrichtung, das heisst Übereinstimmung von Achsen des Werkstücks und der Sonotrode, vorliegt. Bei einer nicht perfekten Ausrichtung wird mit einem in radialer Richtung im Schweissbereich konstant bleibenden Querschnitt der Rippe sichergestellt, dass die Form der Kontaktlinien im Kontaktpunkt mit dem Werkstück im Bereich des Energierichtungsgebers immer gleich ist.

Typischerweise ist die Rippe im Querschnitt in einer Ebene senkrecht zur radialen Richtung V-förmig ausgebildet. Der Winkel zwischen zwei Schenkeln des V-förmigen Querschnitts beträgt typischerweise 40°-70°, insbesondere 60°. Die Höhe der Rippe, das heisst ein Abstand zwischen den Kontaktlinien und einem Grund der Vertiefungen kann typischerweise 0,1mm bis 1,5mm, bevorzugt 0,4 bis 1 mm betragen. Besonders bevorzugt beträgt der Abstand etwa 0,6 mm.

Die Kontaktlinien haben einen Abstand zueinander von etwa 0,1 bis 2,5, bevorzugt 0,8 bis 2 mm. Bevorzugt sind sie etwa 1 mm voneinander beabstandet. Es versteht sich von selbst, dass in Abhängigkeit der Grösse der zu verschweissenden Werkstücke sich diese Dimensionen ändern können.

Bevorzugt ist der Energierichtungsgeber als umlaufende Erhöhung ausgebildet. Typischerweise ist der Energierichtungsgeber auf einen Kreis oder wenigstens teilweise auf einen Kreis angeordnet. Dies ist besonders bevorzugt, wenn das erste Werkstück ebenfalls kreisförmig ausgebildet ist, beispielsweise als Ausguss geformt ist.

Die Kontaktlinien werden bevorzugt unter einem Winkel von 90° bezogen auf den Energierichtungsgeber angeordnet. Dadurch ergeben sich besonders genau definierte Schalleinleitungspunkte.

Die Ultraschallschwingungen können als torsionale Schwingungen, als longitudinale Schwingungen oder als Kombinationen von torsionalen und longitudinalen Schwingungen eingeleitet werden. Die Erzeugung von solchen Schwingungen ist dem Fachmann bekannt. Besonders bevorzugt wird eine Kombination von torsionalen und longitudinalen Schwingungen verwendet, die mit einer Sonotrode erzeugt werden, wie sie in der hängigen Anmeldung EP 1920953201 der gleichen Anmelderin beschrieben ist. Der Inhalt dieser Anmeldung wird durch Querverweis in die vorliegende Anmeldung aufgenommen.

Besonders bevorzugt werden Werkstücke bereitgestellt, die aus unterschiedlichem Material bestehen oder unterschiedliche Materialien aufweisen. Insbesondere besteht das erste Werkstück zumindest im Bereich des Energierichtungsgebers aus HDPE. Das zweite Werkstück weist zumindest auf seiner ersten Oberfläche LDPE auf.

Gemäss einem weiteren Aspekt der hervorliegenden Erfindung wird ein Verfahren bereitgestellt, bei dem ebenfalls ein erstes und ein zweites Werkstück in der vorstehend beschriebenen Art und Weise bereitgestellt und in Kontakt gebracht werden und bei welchem Ultraschallschwingungen in eines der Werkstücke über eine Arbeitsfläche der Sonotrode eingeleitet werden. Gemäss diesem Aspekt der Erfindung werden Ultraschallschwingungen im Bereich des Energierichtungsgebers in wenigstens einem Schalleinleitungspunkt in das erste oder in das zweite Werkstück eingeleitet. Ausgehend vom Schalleinleitungspunkt erfolgt ein Aufschmelzen des Materials wenigstens eines der Werkstücke bis in eine Schweisszone, die vom Schalleinleitungspunkt beabstandet ist. Durch das gezielte Einleiten von Schwingungen in Schalleinleitungspunkten, die von der eigentlichen Schweisszone entfernt sind, kann eine zufriedenstellende Schweissung erzeugt werden, selbst wenn aufgrund des Kontakts zwischen Werkstück und Sonotrode das Werkstück in den Schalleinleitungspunkten beeinträchtigt wird.

Gemäss noch einem weiteren Aspekt der Erfindung wird ein zusammengesetzter Gegenstand vorgeschlagen. Der Gegenstand ist typischerweise aus einem ersten und einem zweiten Werkstück zusammengesetzt. Typischerweise erfolgt die Verbindung mit einem wie vorstehend beschriebenen Verfahren. Insbesondere handelt es sich beim Gegenstand um eine Verpackung. Dabei ist das erste Werkstück beispielsweise ein Ausguss, der typischerweise im Spritzgussverfahren hergestellt wurde. Das zweite Werkstück ist typischerweise eine mehrschichtige Verpackungsfolie. Solche Folien sind an sich bekannt und weisen Schichten aus Aluminium, Karton und Kunststoff auf. Denkbar sind aber auch Monolayerfolien.

Das erste und das zweite Werkstück sind mittels einer Ultraschallschweissung miteinander verbunden. Das erste Werkstück weist auf einer dem zweitem Werkstück zugewandten Seite einen Energierichtungsgeber auf. Es versteht sich allerdings, dass der Energierichtungsgeber im Laufe der Verschweissung ganz oder teilweise verschwinden kann.

Erfindungsgemäss weist der Gegenstand auf dem zweiten Werkstück in einem Bereich entlang des Energierichtungsgebers Schalleinleitungseindrücke auf. Die Schalleinleitungseindrücke sind voneinander beabstandet und durch Schweisszonen voneinander getrennt. Die Schalleinleitungseindrücke verlaufen quer zum Energierichtungsgeber. Durch die Schalleinleitung in einzelnen Punkten kann wie vorstehend beschrieben mit kleineren Amplituden und/oder Schweisszeiten gearbeitet werden. Dadurch wird sichergestellt, dass auch drucksensible Werkstücke ohne Beeinträchtigung zuverlässig, insbesondere fest und dicht verschweisst werden können.

Das erste Werkstück weist typischerweise ein erstes Kunststoffmaterial auf oder besteht daraus. Insbesondere kann das Material HDPE sein. Das zweite Werkstück weist typischerweise auf mindestens der dem ersten Werkstück zugewandten Seite ein zweites Kunststoffmaterial auf, das vom ersten Kunststoffmaterial verschieden ist. Typischerweise handelt es sich um LDPE.

Insbesondere können unterschiedliche Kunststoffmaterialien verwendet werden, die unterschiedliche Schmelzpunkte haben, welche aber nicht allzu weit voneinander entfernt sind. Typischerweise unterscheiden sich die Schmelzpunkte um nicht mehr als ca. 40°.

Insbesondere wenn das zweite Werkstück ein Laminat ist, können sich die Schalleinleitungseindrücke im Wesentlichen durch eine oberste Schicht des Laminats hindurch erstrecken. Bei Packfolien erstrecken sich die Schalleinleitungseindrücke insbesondere durch eine oberste Kunststoffschicht bis auf das Niveau einer Kartonschicht.

Die Erfindung wird nachfolgend in Ausführungsbeispielen und anhand der Zeichnungen näher erläutert. Es zeigen:
- Figur 1:: Eine perspektivische Darstellung einer erfindungsgemässen Sonotrode mit einer Aufnahme für Werkstücke.
- Figur 2:: Eine Seitenansicht der Anordnung aus Figur 1 in einer Explosionsdarstellung.
- Figur 3:: Perspektivische Darstellung einer erfindungsgemässen Sonotrode von der Arbeitsfläche her.
- Figur 4:: Eine Seitenansicht einer erfindungsgemässen Sonotrode.
- Figur 5:: Einen Querschnitt durch eine erfindungsgemässe Sonotrode entlang einer Längsachse der Sonotrode.
- Figur 6:: Eine Ansicht auf die Arbeitsfläche einer Sonotrode.
- Figur 7:: Eine vergrösserte Darstellung des Ausschnitts A aus Figur 6.
- Figur 8:: Ein vergrösserter Ausschnitt von zwei Werkstücken, welche mit der Arbeitsfläche einer Sonotrode beaufschlagt werden in perspektivischer Darstellung.
- Figur 9:: Eine Querschnittdarstellung in einer radialen Ebene durch eine erfindungsgemässe Sonotrode und erfindungsgemässe Werkstücke.
- Figur 10:: Eine Seitenansicht auf die Arbeitsfläche einer erfindungsgemässen Sonotrode im vergrösserten Ausschnitt B aus Figur 5.
- Figur 11:: Eine perspektivische Darstellung eines Ausschnitts der Arbeitsfläche einer Sonotrode.
- Figur 12:: Ein Schnittbild eines mit einem Packstoff verbundenen Ausgusses in einer Ebene senkrecht zu einem Energierichtungsgeber und
- Figur 13:: ein Schnittbild durch einen mit einem Packstoff verbundenen Ausgiesser entlang eines Energierichtungsgebers.

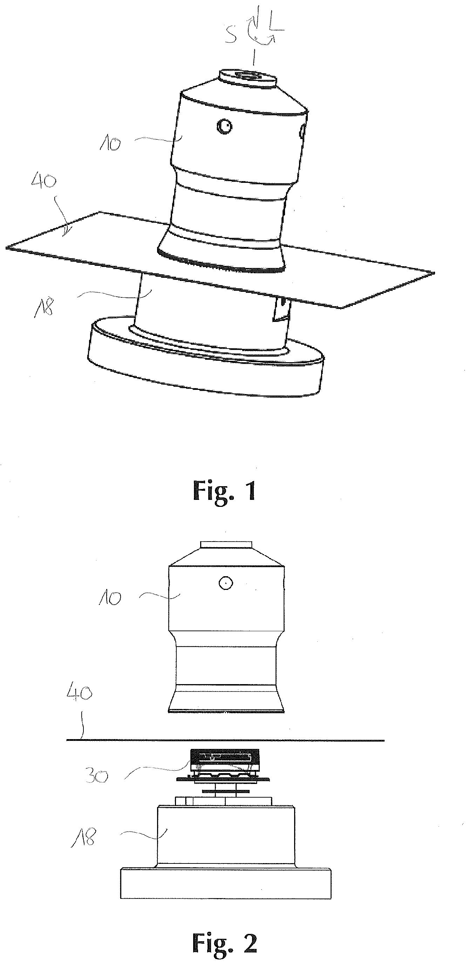

Figur 1 zeigt in perspektivischer Darstellung eine Sonotrode 10 und eine Aufnahme 18. Zwischen der Sonotrode 10 und der Aufnahme 18 sind zwei Werkstücke in Form einer Packstofffolie 40 und eines Ausgiessers (in Figur 1 nicht dargestellt, siehe Figur 2) gezeigt. Die Sonotrode 10 und Aufnahme 18 sind in an sich bekannter Art und Weise zueinander bewegbar, sodass die Werkstücke dazwischen eingeklemmt werden können. Dazu kann die Sonotrode in einem Maschinengestell befestigt sein, welches mit einem Antrieb, typischerweise einem pneumatischen Antrieb oder einem elektromechanischen Antrieb verstellbar ist.

Die Sonotrode 10 wird in an sich bekannter Weise in Ultraschallschwingungen versetzt. Dazu ist ein Ultraschallgenerator und ein Ultraschallkonverter vorgesehen (in Figur 1 nicht gezeigt), welche dem Fachmann an sich bekannt sind. Die Sonotrode 10 wird in torsionale Schwingungen in einer Schwingungsrichtung S um ihre Längsachse L versetzt. Zusätzlich können longitudinale Schwingungen in Längsrichtung L vorhanden sein.

Im Betrieb erfolgt eine Schweissung auf an sich bekannte Art und Weise. Beispielsweise werden Ultraschallschwingungen von 20, 30 oder 35 kHz erzeugt. Die Erzeugung der Schwingungen erfolgt typischerweise über einen an sich bekannten Konverter mit piezoelektrischen Elementen.

Figur 2 zeigt eine Explosionsdarstellung der Anordnung gemäss Figur 1 in einer Seitenansicht. Das erste Werkstück in Form eines Ausgusses 30 und das zweite Werkstück in Form einer Folie aus Packstoff 40 werden zwischen der Sonotrode 10 und der Aufnahme 18 angeordnet.

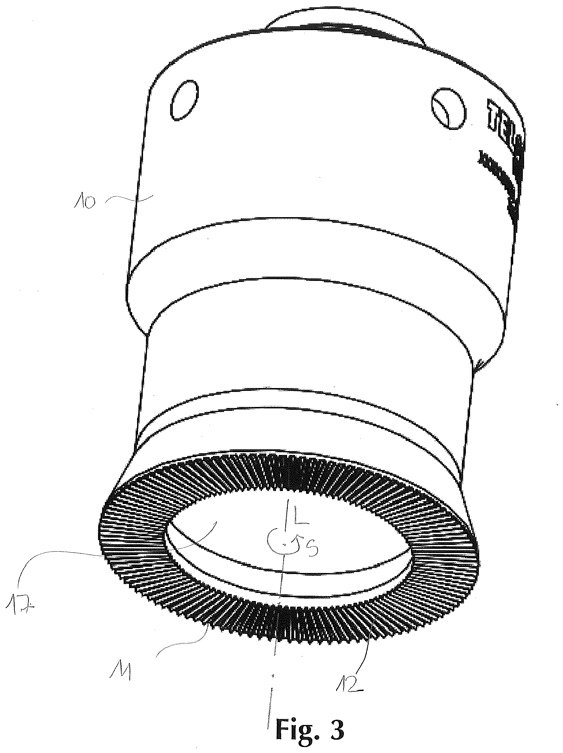

Figur 3 zeigt perspektivisch eine Sonotrode 10 von ihrer Arbeitsfläche 11 her. Die Arbeitsfläche 11 ist kreisringförmig ausgebildet. Innerhalb der kreisringförmigen Arbeitsfläche 11 befindet sich eine Aussparung 17. Die Aussparung 17 bildet eine Freistellung für eine Kontur des Ausgiessers 30. Auf der Arbeitsfläche 11 sind in radialer Richtung bezogen auf die Längsachse L Kontaktlinien 12 angeordnet. Die Kontaktlinien 12 erstrecken sich von einem inneren Rand der Arbeitsfläche 11 bis zu einem äusseren Rand der Arbeitsfläche 11.

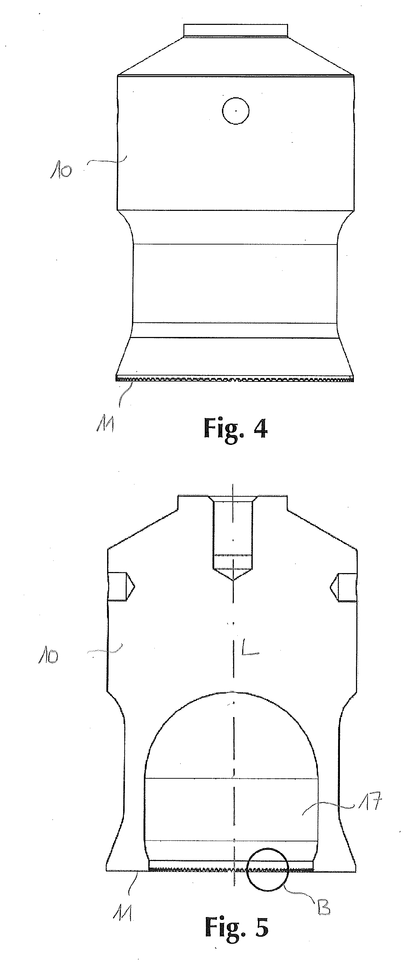

Die Figuren 4 und 5 zeigen die Sonotrode 10 in einer Seitenansicht und in einem Querschnitt entlang der Längsachse L der Sonotrode 10. In der Seitenansicht ist ersichtlich, dass die Arbeitsfläche 11 eine konturierte Oberfläche in Form einer Hirth Verzahnung aufweist. In Figur 5 ist ausserdem die Aussparung 17 für den Ausguss 30 (in Figur 5 nicht dargestellt) zu erkennen.

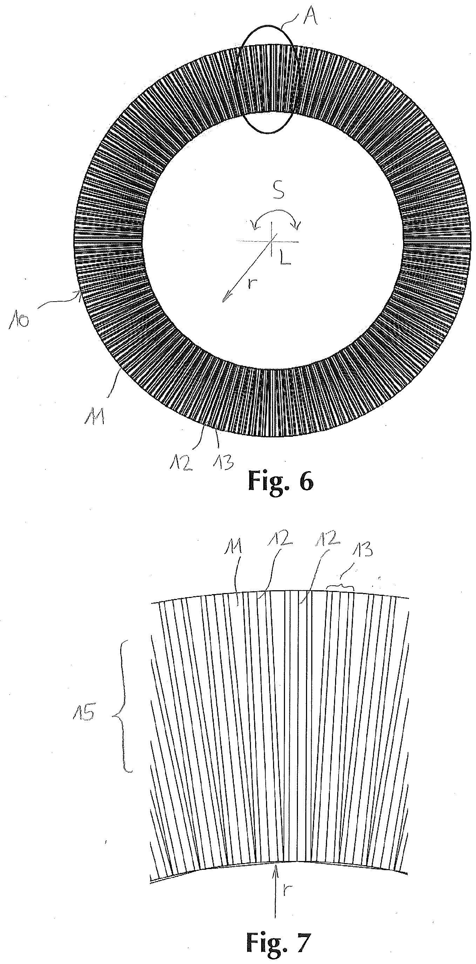

Figur 6 zeigt eine detaillierte Ansicht der Arbeitsfläche 11 der Sonotrode 10. Die Kontaktlinien 12 sind durch Rippen 13 gebildet, welche sich in radialer Richtung r von der Längsachse L der Sonotrode 10 erstrecken.

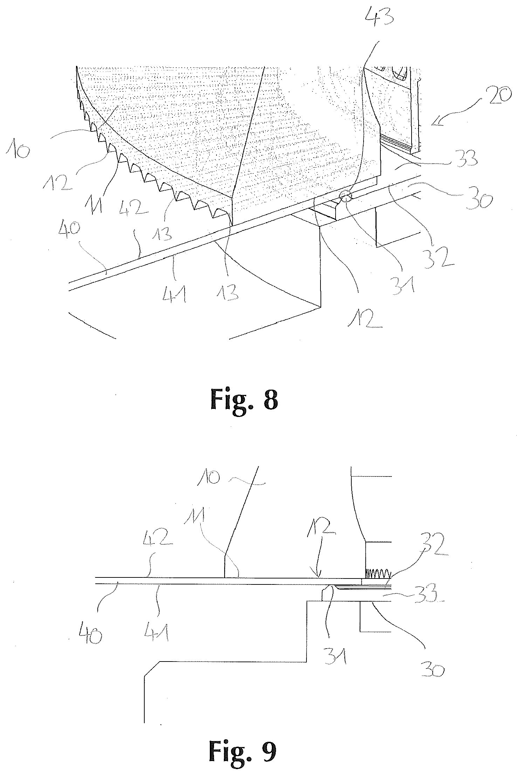

In Figur 7 ist eine vergrösserte Darstellung des Ausschnitts A aus Figur 6 gezeigt. Die Rippen 13 verlaufen in radiale Richtung r und weisen auf ihrer obersten Stelle die Kontaktlinien 12 auf. Der Querschnitt durch die Rippen 13 in einer Ebene senkrecht zur radialen Richtung r ist dabei über einen Schweissbereich 15 konstant. Der Schweissbereich 15 bezeichnet denjenigen Bereich, in dem die Arbeitsfläche 11 der Sonotrode 10 mit dem Packmaterial 40 in einem Bereich benachbart zu einem Energierichtungsgeber 31 am Ausguss 30 (siehe Figuren 8 und 9) in Kontakt gelangen kann.

In Figur 8 ist ein vergrösserter Ausschnitt eines Teils der Sonotrode 10, des Ausgiessers 30 und des Packmaterials 40 gezeigt.

Der Ausgiesser 30 weist einen Flansch 33 auf, mit welchem das Packmaterial 40 verbunden werden soll. Am Flansch 33 ist auf der gegen das Packmaterial 40 hin gerichteten Seite 32 ein Energierichtungsgeber 31 vorgesehen. Der Energierichtungsgeber weist in an sich bekannter Art und Weise einen dreieckigen Querschnitt auf.

Der Energierichtungsgeber weist eine Höhe von typischerweise 0,3 mm auf.

Das Packmaterial 40 weist eine erste Oberfläche 41 auf, welche gegen den Ausgiesser 30 und insbesondere die Seite 32 des Flansches 30 hin gerichtet ist. Eine zweite Oberfläche 42 des Packmaterials 40 ist gegen die Arbeitsfläche 11 der Sonotrode hin gerichtet. Dabei verlaufen die Kontaktlinien 12 der Arbeitsfläche 11 der Sonotrode 10 entlang der zweiten Oberfläche 42.

Die Sonotrode 10 ist so bezogen auf den Ausgiesser 30 positioniert, dass sich die Kontaktlinien 12 in Schalleinleitungspunkten 43 unter einem rechten Winkel mit dem Energierichtungsgeber 31 kreuzen. Der Energierichtungsgeber 31 ist auf dem Flansch 33 kreisförmig umlaufend angeordnet. Die miteinander verschweissten Ausgiesser 30 und Packmaterial 40 bilden gemeinsam eine Verpackung 20, von der in Figur 8 ein Ausschnitt erkennbar ist. Typischerweise ist diese Verpackung eine Lebensmittelverpackung, z.B. Getränkeverpackung. Denkbar sind aber auch Verpackungen für andere Produkte, insbesondere Flüssigkeiten oder Schüttgut.

Figur 9 zeigt eine Darstellung ähnlich wie Figur 8 in einem Querschnitt. Die Sonotrode 10 ist mit ihrer Arbeitsfläche 11 und deren Kontaktlinien 12 in Kontakt mit der zweiten Oberfläche 42 des Packmaterials 40. Das Packmaterial 40 kontaktiert mit der ersten Oberfläche 41 den Ausgiesser 30 im Bereich des Energierichtungsgebers 31.

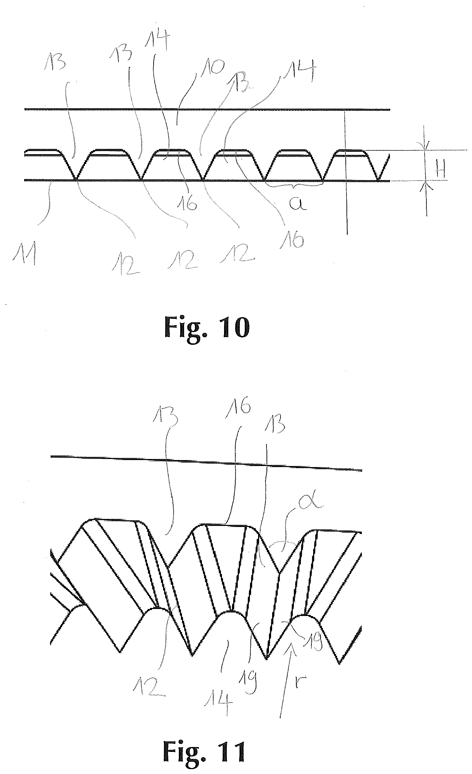

Figur 10 zeigt einen vergrösserten Ausschnitt der Arbeitsfläche 11 der Sonotrode gemäss Ausschnitt B in Figur 5. Die Arbeitsfläche 11 ist mit einer Strukturierung ähnlich einer Hirth Verzahnung versehen. Dadurch sind an der Arbeitsfläche 11 Rippen 13 mit einem V-förmigen Querschnitt vorhanden. Die Spitze der V-förmigen Rippen bildet die Kontaktlinien 12. Zwischen den Rippen ist eine Vertiefung 14 mit einem Grund 16 gebildet. Die Höhe der Vertiefung, das heisst der Abstand H zwischen den Kontaktlinien 12 und dem Grund 16 beträgt 0,6 mm. Der Abstand a zwischen zwei benachbarten Kontaktlinien 12 beträgt im gezeigten Ausführungsbeispiel 1 mm.

Figur 11 zeigt eine perspektivische Darstellung eines Ausschnitts ähnlich wie in Figur 10. In Figur 11 ist erkennbar, dass sich der Querschnitt der Rippen 13 in radialer Richtung r im Wesentlichen nicht ändert. Hingegen ändert sich die Form und insbesondere die Breite der Vertiefungen 14 und deren Grund 16 zwischen den einzelnen Rippen 13. Der Winkel α zwischen zwei Schenkeln 19 der Rippen 13 beträgt 60°.

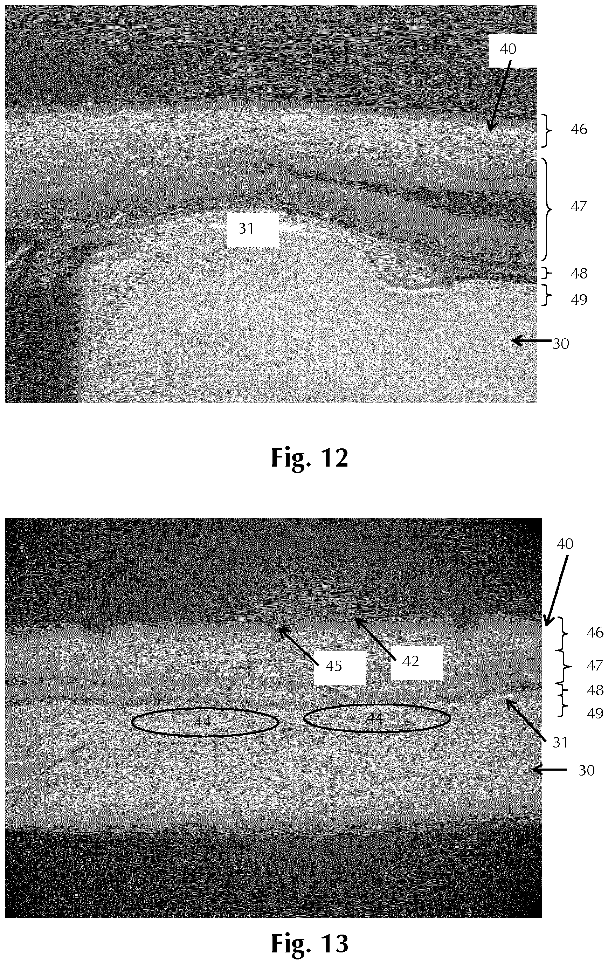

Figur 12 zeigt einen Schnitt durch eine Schicht eines Packmaterials 40, welches auf einen Ausguss 30 geschweisst wurde. Der Schnitt erfolgt in einer Richtung senkrecht zum Energierichtungsgeber 31, das heisst in einer Richtung analog zum Schnitt gemäss Figur 9. Der Energierichtungsgeber 31 ist immer noch erkennbar, allerdings im Vergleich zur ursprünglichen Form (siehe dazu Figuren 8 und 9) etwas abgeflacht. Es liegt eine kontinuierliche und gleichmässige Verschweissung zwischen dem Packstoff 40 und dem Ausgiesser 30 vor.

Der Packstoff 40 weist eine Aluminiumschicht 48 und eine Kartonschicht 47 auf, welche beidseitig von einer LDPE Schicht 46 eingeschlossen sind. Wie Figur 12 zeigt, ist die Aluminiumschicht 48 nicht beschädigt. Die untere LDPE Schicht 49 ist innig mit dem Material des Ausgiessers 30 verbunden, welches im gezeigten Ausführungsbeispiel HDPE ist.

Figur 13 zeigt einen Schnitt durch einen Gegenstand aus einem Ausgiesser 30 und einem Packmaterial 40 entlang des Energierichtungsgebers. Auch hier ist erkennbar, dass die mittlere Aluminiumschicht 48 unbeschädigt ist. Auf der zweiten Oberfläche 42 des Packstoffs 40, welcher der Sonotrode 10 zugewandt war, sind Schalleinleitungseindrücke 45 erkennbar. Die Schalleinleitungseindrücke 45 durchdringen im Wesentlichen die oberste Schicht 46 aus LDPE und erstrecken sich bis fast zur Kartonschicht 47. Die untere LDPE Schicht 49 ist in Schweisszonen 44 innig mit dem Ausgiesser 30 verbunden. Die Schweisszonen 44 erstrecken sich zwischen den Schalleinleitungseindrücken 45.

## Patentansprüche

1. Verfahren zum Verbinden von Werkstücken (30, 40) mittels Ultraschalls, enthaltend die Schritte
- Bereitstellen eines ersten Werkstücks (30) mit wenigstens einem Energierichtungsgeber (31), insbesondere eines Ausgusses für eine Verpackung
- Bereitstellen eines zweiten Werkstückes (40), insbesondere eines Packstoffs
- In Kontakt Bringen des ersten und des zweiten Werkstücks (30, 40), derart, dass der Energierichtungsgeber (31) in Kontakt mit einer ersten Oberfläche (41) des zweiten Werkstücks (40) gelangt
- Einleiten von Ultraschallschwingungen in eines der Werkstücke (40) über eine Arbeitsfläche (11) einer Sonotrode (10),
**dadurch gekennzeichnet, dass** eine Sonotrode (10) verwendet wird, welche auf der Arbeitsfläche (11) eine Kontur mit Kontaktlinien (12) aufweist und
dass die Sonotrode (10) bezüglich des ersten Werkstücks (30) so positioniert wird, dass die Kontaktlinien (12) quer zum Energierichtungsgeber (31) verlaufen.

2. Verfahren nach Anspruch 1, wobei die Arbeitsfläche (11) der Sonotrode (10) in Kontakt mit einer der ersten Oberfläche (41) gegenüberliegenden zweiten Oberfläche (42) des zweiten Werkstücks (40) gebracht wird

3. Verfahren nach Anspruch 1 oder 2, wobei eine Sonotrode (10) verwendet wird, bei der die Arbeitsfläche (11) kreisförmig ist und die Kontaktlinien (12) sternförmig auf der Arbeitsfläche (11) angeordnet sind.

4. Verfahren nach Anspruch 3, wobei eine Sonotrode (10) verwendet wird, bei der die Kontaktlinien (12) auf einer Rippe (13) zwischen zwei Vertiefungen (14) ausgebildet sind.

5. Verfahren nach Anspruch 4, wobei der Querschnitt der Rippe (13) in einer Ebene senkrecht zur radialen Richtung (r) einem Schweissbereich (15) in radialer Richtung konstant bleibt.

6. Verfahren nach Anspruch 4, wobei die Rippe (13) im Querschnitt in einer Ebene senkrecht zur radialen Richtung V-förmig ausgebildet ist, insbesondere mit einem Winkel (α) von 40°-70°, insbesondere 60° und/oder wobei der Abstand (H) zwischen den Kontaktlinien (12) und einem Grund (16) der Vertiefungen (14) 0,1mm bis 1,5mm, bevorzugt 0,4mm bis 1mm, insbesondere etwa 0.6mm beträgt.

7. Verfahren nach einem der Ansprüche 1 bis 5, wobei die Kontaktlinien (12) einen Abstand (a) von 0,1mm bis 2,5mm, bevorzugt 0.8 bis 2mm, insbesondere etwa 1mm zueinander aufweisen.

8. Verfahren nach einem der Ansprüche 1 bis 3, wobei der Energierichtungsgeber als umlaufende Erhöhung (31) ausgebildet ist, insbesondere als kreisförmige Erhöhung.

9. Verfahren nach einem der Ansprüche 1 bis 4, wobei die Kontaktlinien (12) unter einem Winkel (β) von 90° zum Energierichtungsgeberverlaufen.

10. Verfahren nach einem der Ansprüche 1 bis 5, wobei die Ultraschallschwingungen als torsionale Schwingungen, als longitudinale Schwingungen oder als Kombination von torsionalen und longitudinalen Schwingungen eingeleitet werden.

11. Verfahren nach einem der Ansprüche 1 bis 6, wobei als erstes und als zweites Werkstück (30, 40) Werkstücke mit unterschiedlichem Material bereitgestellt werden, wobei insbesondere das erste Werkstück (30) zumindest im Bereich des Energierichtungsgeber (31) aus HDPE besteht und das zweite Werkstück (40) zumindest auf der ersten Oberfläche (41) LDPE aufweist.

12. Verfahren, insbesondere nach einem der Ansprüche 1 bis 7, enthaltend die Schritte
- Bereitstellen eines ersten Werkstücks (30) mit wenigstens einem Energierichtungsgeber (31), insbesondere eines Ausgusses für eine Verpackung
- Bereitstellen eines zweiten Werkstückes (40), insbesondere eines Packstoffs
- In Kontakt Bringen des ersten und des zweiten Werkstücks (30, 40), derart, dass der Energierichtungsgeber (31) insbesondere in Kontakt mit einer ersten Oberfläche (41) des zweiten Werkstücks (40) gelangt
- Einleiten von Ultraschallschwingungen in eines der Werkstücke (40) über eine Arbeitsfläche (11) einer Sonotrode (10),
**dadurch gekennzeichnet, dass** Ultraschallschwingungen im Bereich des Energierichtungsgeber (31) in wenigstens einem Schalleinleitungspunkt (43) in das erste oder das zweite Werkstück (30, 40) eingeleitet werden und dass ausgehend vom Schalleinleitungspunkt (43) ein Aufschmelzen des Materials wenigstens eines der Werkstücke (30, 40) bis in eine Schweisszone (44) erfolgt, die vom Schalleinleitungspunkt (43) beabstandet ist.

13. Zusammengesetzter Gegenstand (20), insbesondere Verpackung, mit einem ersten und einem zweiten Werkstück (30, 40), insbesondere hergestellt mit einem Verfahren nach einem der Ansprüche 1 bis 12,
wobei das erste und das zweite Werkstück (30, 40) mittels Ultraschallschweissung miteinander verbunden sind und wobei das erste Werkstück (30) auf einer dem zweiten Werkstück (40) zugewandten Seite (32) einen Energierichtungsgeber (31) aufweist,
**dadurch gekennzeichnet, dass** der Gegenstand (10) auf dem zweiten Werkstück (40) in einem Bereich entlang des Energierichtungsgeber (31) Schalleinleitungseindrücke (45) aufweist, welche voneinander beabstandet und durch Schweisszonen (44) voneinander getrennt sind und welche quer zum Energierichtungsgeber (31) verlaufen.

14. Gegenstand nach Anspruch 12, wobei der Gegenstand eine Verpackung (20) ist und das erste Werkstück ein Ausguss (30) und dass zweite Werkstück ein Packmaterial (40) ist.

15. Gegenstand (20) nach einem der Ansprüche 12 oder 13, wobei das erste Werkstück (30) ein erstes Kunststoffmaterial aufweist und insbesondere daraus besteht, insbesondere HDPE, und wobei des zweite Werkstück (40) auf seiner dem ersten Werkstück (30) zugewandten Seite (41) ein zweites Kunststoffmaterial aufweist, das vom ersten Kunststoffmaterial verschieden ist, insbesondere LDPE.

16. Gegenstand nach einem der Ansprüche 12 bis 14, wobei das zweite Werkstück (40) ein Laminat ist und sich die Schalleinleitungseindrücke (45) im Wesentlichen durch eine oberste Schicht (46) des Laminats hindurch erstrecken.
